# EUROPÄISCHE PATENTANMELDUNG

(11) **EP 0 829 336 A2**
(43) Veröffentlichungstag der Anmeldung: **18.03.1998**
(21) Anmeldenummer: 97202573.8
(22) Anmeldetag: 29.07.1997
(51) Int. Cl.: B29C 45/14, G11B 15/00

(54) **Aus Kunststoff geformtes Halteteil**

(30) Priorität: 30.08.1996 DE 19635049
(71) Anmelder: Philips Patentverwaltung GmbH, 22335 Hamburg (DE); PHILIPS ELECTRONICS N.V., 5621 BA Eindhoven (NL)
(72) Erfinder: Gumbert, Hans, Röntgenstrasse 24, 22335 Hamburg (DE)
(74) Vertreter: von Laue, Hanns-Ulrich, Dipl.-Ing.

(57) **Zusammenfassung**

Die Erfindung bezieht sich auf ein aus Kunststoff geformtes Halteteil (15, 16, 23), das als Basis für Funktionsteile (18) an einer metallischen Trägerplatte (1, 20) gebildet ist, das zu seiner Halterung an der metallischen Trägerplatte (1, 20) einen an dieser vorgesehenen Durchbruch (2, 21) mit einem Haltesteg (5, 17) durchgreift und das Haltestücke (7a, 7b) aufweist, die sich an beiden Plattenoberflächen (6a, 6b) der metallischen Trägerplatte (1, 20) abstützen. Um zu gewährleisten, daß die vorgegebene Position des Halteteils (15, 16, 23) gegenüber der Durchbruchsachse trotz des Schwindens des Kunststoffes sichergestellt ist, ist vorgesehen, daß die Plattenoberflächen (6a, 6b) der metallischen Trägerplatte (1, 20) seitlich des Durchbruchs (2, 21) Vertiefungen (4a, 4b; 21a bis 21d, 22a bis 22d) aufweisen, in welche Ansätze (11a, 11b; 24a bis 24d, 25a bis 25d) der Haltstücke (7a, 7b) des Halteteiles (15, 16, 23) eingreifen.

## Beschreibung

Die Erfindung bezieht sich auf ein aus Kunststoff geformtes Halteteil, das als Basis für Funktionsteile an einer metallischen Trägerplatte gebildet ist, das zu seiner Halterung an der metallischen Trägerplatte einen an dieser vorgesehenen Durchbruch mit einem Haltesteg durchgreift und das Haltestücke aufweist, die sich an beiden Plattenoberflächen abstützen.

Halteteile aus Kunststoff, die an metallische Trägerplatten angespritzt werden, sind z.B. aus "Feinwerktechnik und Meßtechnik", 87. Jahrgang, Heft 6, Sept. 1979, Seiten 253 bis 259, bekannt. Die Fertigungstechnik derartiger Halteteile in Verbindung mit metallischen Trägerplatten ist unter dem Namen Outsert-Moulding-Technik bekannt. Die an der metallischen Trägerplatte angespritzten Halteteile dienen den verschiedensten Zwecken, wie der Halterung, der Lagerung oder der Führung der Funktionsteile. Die Funktionsteile können z.B. Lager, Zahnräder, Schieber, Hebel oder Achsen sein. Die Verbindungstechnik zwischen den aufgespritzten Halteteilen und der tragenden Platte besteht immer darin, daß auf der Oberseite und der Unterseite der Platte Ränder von Plattendurchbrüchen von Kunststoff-Haltestücken überlappt sind und daß die Kunststoff-Haltestücke über einen sich durch den Durchbruch hindurch erstreckenden Haltesteg aus Kunststoff verbunden sind. Der Haltesteg aus Kunststoff kann sowohl massiv als auch innen hohl in Form einer Hülse ausgebildet sein.

Ferner ist bekannt, daß der nach dem Aufspritzen des Kunststoffes einsetzende Abkühlungsvorgang von einer Schwindung des Kunststoffes begleitet ist. Diese Schwindung erfolgt in allen Richtungen, also in Längsrichtung des Haltesteges und senkrecht dazu. Die Schwindung in Längsrichtung des Haltesteges führt zu einem verstärkten Andruck der Haltestücke an die Plattenoberflächen. Die Schwindung quer zur Längsrichtung bewirkt ein ungewolltes Spiel zwischen der Wand des Durchbruches in der metallischen Trägerplatte und der Außenwand des den Durchbruch durchziehenden Haltesteges. Dieses Spiel hat zur Folge, daß der genaue Sitz des Halteteils gegenüber dem Durchbruch nicht mehr exakt vorgegeben ist. Die Achse des Halteteiles und die Durchbruchsachse fallen nicht mehr sicher zusammen und können sich gegeneinander verschieben.

Es ist Aufgabe der Erfindung, das Halteteil so auszubilden, daß die vorgegebene Position des Halteteils gegenüber der Durchbruchsachse trotz des Schwindens des Kunststoffes sichergestellt ist.

Diese Aufgabe ist erfindungsgemäß dadurch gelöst, daß die Plattenoberflächen der metallischen Trägerplatte seitlich des Durchbruchs Vertiefungen aufweisen, in welche Ansätze der Haltestücke des Halteteiles eingreifen.

Die Ansätze der Haltestücke drücken infolge der Schwindung des Kunststoffes mit einer axialen Druckkomponente gegen die zur Plattenmitte hin gelegenen Böden der Vertiefungen und mit einer radialen Druckkomponente in Richtung auf die Durchbruchsachse. Die axiale Druckkomponente sorgt für einen festen Andruck der Haltestücke gegen die metallische Trägerplatte, und die nach innen gerichtete radiale Druckkomponente sorgt für eine Zentrierung des Halteteils bezüglich der Durchbruchsachse. Damit ist der genaue Sitz des Halteteils gegenüber der Durchbruchsachse gewährleistet.

In weiterer Ausgestaltung der Erfindung ist vorgesehen, daß die Böden der Vertiefungen derart geneigt zur Plattenmitte angeordnet sind, daß sich die Tiefe der Vertiefung mit zunehmendem Abstand von der Durchbruchsachse vergrößert.

Damit wird ein Abheben der freien Enden der Haltestücke von der metallischen Trägerplatte verhindert.

In weiterer Ausgestaltung der Erfindung ist vorgesehen, daß beide Plattenoberflächen der metallischen Trägerplatte seitlich des Durchbruches mindestens drei Vertiefungen aufweisen, welche jeweils um den Winkel 360°/x gegeneinander versetzt auf dem Umfang eines Kreises um die Achse des Durchbruches angeordnet sind, wobei x die Anzahl der Vertiefungen auf jeder Oberflächenseite ist, und daß sich das Halteteil durch die Anordnung der Vertiefungen gegenüber der Durchbruchsachse zentriert.

Durch die Anordnung der Vertiefungen auf dem Umfang eines Kreises um die Durchbruchsachse wird eine gleichmäßige Aufteilung der radialen Schwindungskräfte in Richtung auf die Achse des Durchbruchs erreicht. Dadurch wird Halteteil mittels der Schwindungskräfte zentriert. Durch die diskrete Ausbildung mehrerer separater Vertiefungen wird das Halteteil gegen ein Verdrehen gesichert.

Die selbstzentrierende Ausbildung der Halteteile nach der Erfindung an der Trägerplatte erfolgt in der Weise, daß die Haltestücke infolge des Schrumpfens des Kunststoffes derart in Vertiefungen der Plattenoberflächen hineingezogen werden, daß von den Ansätzen der Haltestücke radial nach innen gerichtete Kräfte auf die Vertiefungen ausgeübt werden, die das Halteteil gegenüber der Durchbruchsachse zentrieren.

Die Anzahl der Vertiefungen ist dabei von der Form des Durchbruchs abhängig. Bei einem quadratischen Durchbruch sind vorzugsweise 4 Vertiefungen, bei einem dreieckigen Durchbruch 3 Vertiefungen jeweils an den Ecken des Durchbruchs anzuordnen, damit sich das Halteteil genau zentriert und damit mechanische Verspannungen vermieden werden.

Bei einer weiteren vorteilhaften Ausgestaltung der Erfindung ist vorgesehen, daß beide Plattenoberflächen der metallischen Trägerplatte je eine ringförmige Vertiefung aufweisen, wobei die Mittelachse der ringförmigen Vertiefungen mit der Durchbruchsachse im wesentlichen identisch ist, und daß sich das Halteteil durch die Anordnung der Vertiefungen gegenüber der Durchbruchsachse zentriert.

Eine ringförmige Vertiefung ist fertigungstechnisch besonders günstig und ist immer dann vorzuziehen, wenn keine absolute Verdrehsicherung des Halteteils notwendig ist. Der Durchbruch sollte bei Verwendung einer ringförmigen Vertiefung vorzugsweise einen kreisförmigen Querschnitt aufweisen, damit sich eine exakte Zentrierung des Halteteils gegenüber der Durchbruchsachse ergibt und damit mechanische Verspannungen vermieden werden.

Eine solche Anordnung ist insbesondere für die Halterung von Achsen oder Lagern geeignet. Hierfür muß der Haltesteg in Form einer Hülse ausgebildet sein, in deren Innenraum das Lager oder die Achse befestigt wird.

Das erfindungsgemäße Halteteil kann vorzugsweise in einem Laufwerk oder in einem Magnetbandkassettengerät eingesetzt werden.

Ein Verfahren zum Herstellen des Halteteiles ist dadurch gekennzeichnet, daß während des Herstellens der Vertiefungen in der metallischen Trägerplatte der den Vertiefungen zugeordnete Durchbruch der metalllischen Trägerplatte mittels eines Füllstempels ausgefüllt wird.

Der Füllstempel verhindert ein Verformen des Durchbruchs beim Stanzen der dem Durchbruch zugeordneten Vertiefungen.

Die Erfindung wird nachfolgend anhand der Zeichnung näher erläutert. Es zeigen:
Fig. 1 eine Draufsicht auf einen Ausschnitt einer metallischen Trägerplatte mit einem Durchbruch mit kreisförmigem Querschnitt, mit zwei dem Durchbruch zugeordneten ringförmigen Vertiefungen in der Oberfläche der metallischen Trägerplatte und mit einem aufgespritzten Halteteil aus Kunststoff, dessen Haltesteg als Hülse ausgebildet ist,
Fig. 2 einen Schnitt längs der Linie II-II nach Fig. 1,
Fig. 3 eine Schnittdarstellung einer metallischen Trägerplatte mit einem Durchbruch mit kreisförmigem Querschnitt, mit zwei dem Durchbruch zugeordneten ringförmigen Vertiefungen in der Oberfläche der metallischen Trägerplatte und mit einem aufgespritzten Halteteil aus Kunststoff, dessen Haltesteg massiv ausgebildet ist,
Fig. 4 einen Schnitt durch die metallische Trägerplatte gemäß Fig. 1, wobei der Durchbruch während des Herstellens der Vertiefungen mit einem Füllstempel ausgefüllt ist und mittels Prägestempeln dem Durchbruch zugeordnete Vertiefungen gebildet werden,
Fig. 5 eine Draufsicht entsprechend Fig. 1, wobei der Durchbruch quadratisch ausgebildet ist und diesem jeweils auf jeder Oberflächenseite vier einzelne Vertiefungen zugeordnet sind,

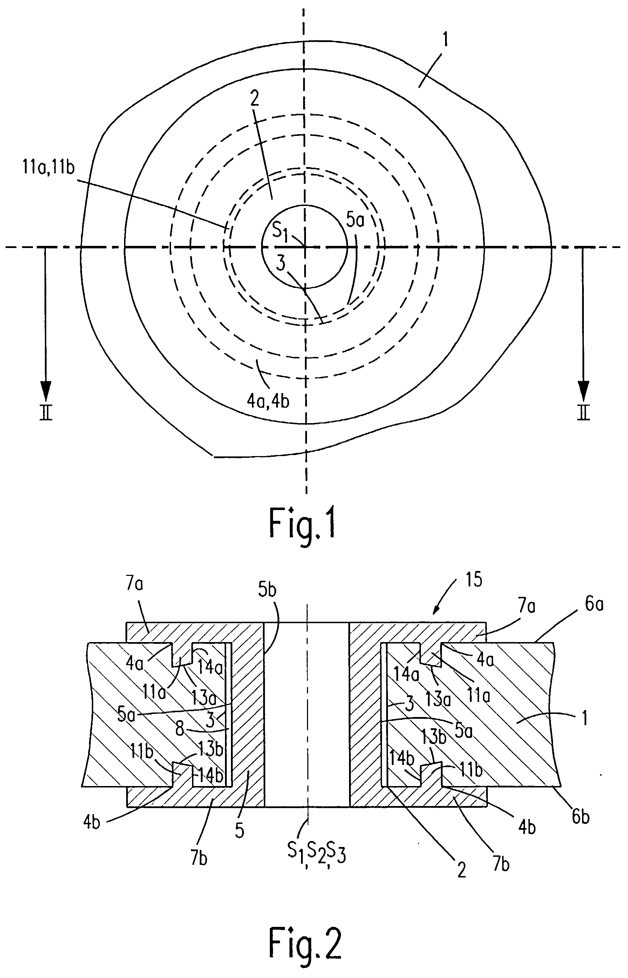

Fig. 1 zeigt eine Draufsicht auf eine metallische Trägerplatte 1, welche einen Durchbruch 2 mit kreisförmigen Querschnitt und mit einer Durchbruchswand 3 aufweist. Der Durchbruch 2 weist eine Mittelachse S₁ auf.

Fig. 2 zeigt die Anordnung nach Fig. 1 im Schnitt längs der Linie II-II nach Fig. 1. Die metallische Trägerplatte 1 weist eine erste Oberflächenseite 6a und eine zweite Oberflächenseite 6b auf. Radial außerhalb des Durchbruchs 2 ist auf der Oberflächenseite 6a der metallischen Trägerplatte 1 eine erste ringförmige Vertiefung 4a und auf der Oberflächenseite 6b der metallischen Trägerplatte 1 eine zweite ringförmige Vertiefung 4b vorgesehen. Die Mittelachsen S₂ und S₃ der ersten ringförmigen Vertiefung 4a und der zweiten ringförmigen Vertiefung 4b sind identisch mit der Mittelachse S₁ des Durchbruchs 2. In den Durchbruch 2 ist in Outsert-Moulding-Technik ein Halteteil 15 eingespritzt. Ein in Form eines Hohlzylinders ausgebildeter Haltesteg 5 des Halteteils 15 durchgreift den Durchbruch 2 der metallischen Trägerplatte 1 und stützt sich an den beiden Oberflächenseiten 6a bzw. 6b radial seitlich des Durchbruchs 2 mittels Haltestücken 7a und 7b ab. Der als Hohlzylinder ausgebildete Haltesteg 5 weist eine Außenwand 5a und eine Innenwand 5b auf. In dem als Hohlzylinder ausgebildeten Haltesteg 5 lassen sich verschiedenartigste, nicht dargestellte Funktionsteile befestigen, z.B. Lager, Achsen, Stifte u.s.w. Diese können z.B. in den Haltesteg 5 eingeklemmt, eingeklickt oder eingeklebt werden. Auch ist es denkbar, das Funktionsteil an dem Halteteil mittels Schweißen zu befestigen.

Nach dem Anspritzen des Kunststoffes an die metallische Trägerplatte 1 setzt im Rahmen der Abkühlung ein Schwindungsvorgang ein. Dieser Schwindungsvorgang verläuft sowohl in Richtung der Mittelachse S₁ des Durchbruchs 2 als auch quer dazu. Die Schwindung in Richtung der Mittelachse S₁ führt zu einem stärkeren Andruck der Haltestücke 7a und 7b auf die Oberflächenseiten 6a, 6b der metallischen Trägerplatte 1. Die Schwindung quer zur Mittelachse S₁ führt dazu, daß sich die Außenwand 5a des Haltesteges 5 im Durchmesser verringert und damit von der Durchbruchswand 3 löst. Dadurch ergibt sich ein Schwindungsspalt 8.
Durch diesen Schwindungsspalt 8 würde das Halteteil 15 an sich seine Positionsgenauigkeit bezüglich der metallischen Trägerplatte 1 verlieren. Die Mittelachse S₁ des Durchbruches 2 würde nicht mehr mit der Mittelachse des Halteteiles 15 zusammenfallen. Seitlicher Druck von außen könnte ohne weitere Maßnahmen zu einem Versatz führen.
Um dies zu vermeiden, sind in der metallischen Trägerplate 1 die ringförmigen Vertiefungen 4a und 4b vorgesehen, in die Ansätze 11a und 11b der Haltestücke 7a und 7b des Halteteiles 15 eingreifen. Diese Ansätze 11a und 11b haben sich beim Aufspritzen gebildet. Die Böden 13a und 13b der Vertiefungen 4a und 4b sind als Schrägen ausgebildet, und zwar derart, daß die axialen Tiefen der Vertiefungen 4a und 4b mit zunehmendem Abstand von der Mittelachse S₁ des Durchbruchs 2 zunehmen.

Infolge der Schwindung des Kunststoffes bei dem auf das Anspritzen folgenden Abkühlungsvorgang drücken die Ansätze 11a und 11b der Haltestücke 7a bzw. 7b quer zur Mittelachse S₁ gegen die parallel zur Mittelachse S₁ verlaufenden Innenwände 14a und 14b der Vertiefungen 4a bzw. 4b und deren schräge Böden 13a und 13b. Auf die schrägen Böden 13a und 13b üben die Ansätze 11a und 11b der Haltestücke 7a und 7b außer den Kräften quer zur Mittelachse S₁ auch axiale Kräfte in Richtung der Achse S₁ aus. Die axiale Kraftkomponente verhindert ein Abheben der Haltestücke 7a und 7b des Halteteils 15 von der metallischen Trägerplatte 1, und die radiale Kraftkomponente richtet das Halteteil 15 bezüglich der Achse S₁ des Durchbruchs 2 aus.

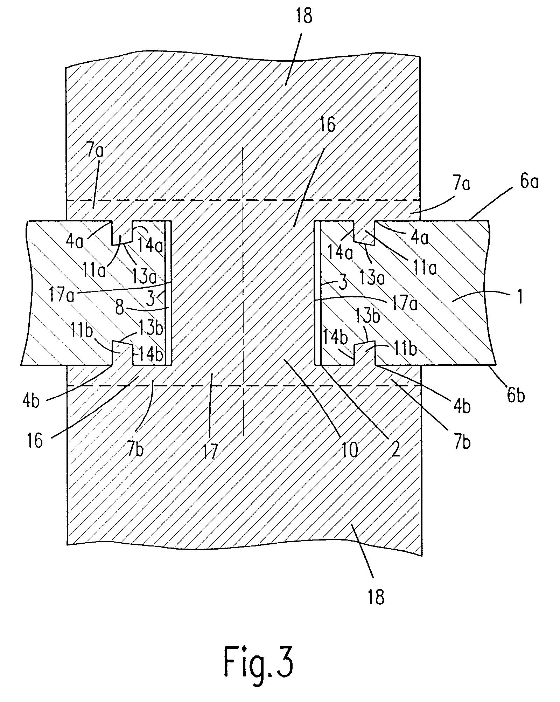

In der Fig 3. ist ein Halteteil 16 dargestellt, das im Gegensatz zu dem in den Fig. 1 und 2 dargestellten Halteteil 15 mit einem massiven Haltesteg 17 versehen ist, der Haltestegwände 17a aufweist. Das Halteteil 16 ist einstückig mit einem schematisch dargestellten Funktionsteil 18 ausgebildet. Dieses Funktionsteil 18 kann z.B. eine Achse, ein Hebel oder dergl. sein.

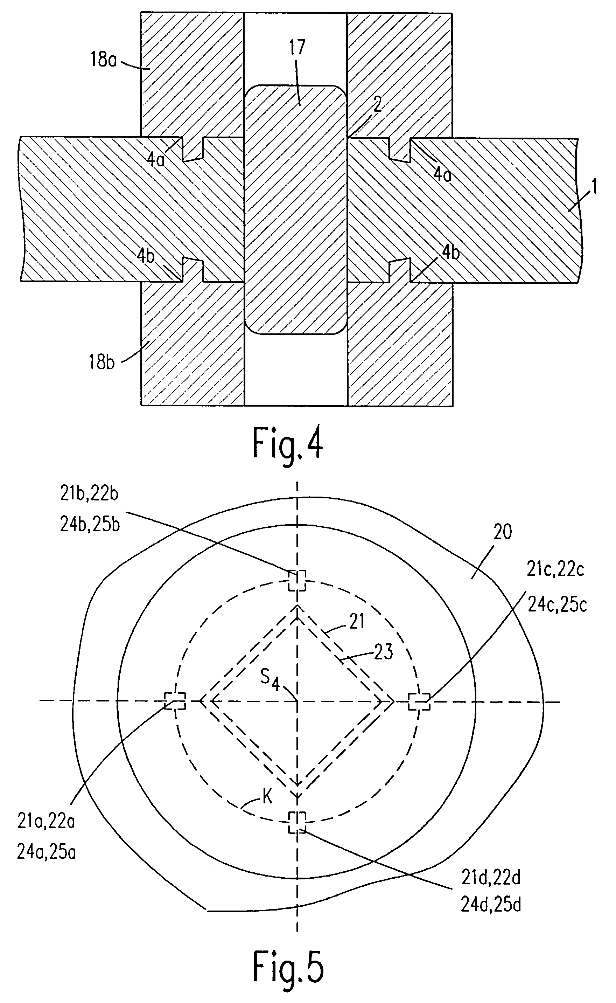

Fig. 4 zeigt eine mögliche Herstellungsweise zum Herstellen der ringförmigen Vertiefungen 4a und 4b. Es besteht die Gefahr, daß beim Bilden der Vertiefungen eine Verformung des Durchbruchs 2 auftritt. Um ein Verformen des Durchbruches 2 bei dem Stanzen der Vertiefungen 4a und 4b zu verhindern, wird der Druchbruch 2 deshalb beim Bilden der Vertiefungen 4a und 4b mittels eines Füllstempels 17 ausgefüllt. Bei eingesetztem Füllstempel 17 werden zwei Prägestempel 18a und 18b an die metallische Trägerplatte 1 herangeführt und die Vertiefungen 4a und 4b gestanzt. Dabei sorgt der Füllstempel 17 dafür, daß die Form des Druchbruchs 2 unverändert erhalten bleibt.

Fig. 5 zeigt eine Draufsicht auf einen Ausschnitt einer metallische Trägerplatte 20, welche einen quadratisch ausgebildeten Durchbruch 21 aufweist. Auf der einen Oberflächenseite der metallischen Trägerplatte 20 sind seitlich des Durchbruchs 21 vier einzelne Vertiefungen 21a bis 21d und auf der anderen Oberflächenseite vier einzelne Vertiefungen 22a bis 22d vorgesehen. Die Vertiefungen 21a bis 21d und 22a bis 22d haben jeweils denselben Abstand von der Mittelachse S₄ des Durchbruchs 21 und befinden sich damit auf einem Kreis K um die Mittelachse S₄ des Durchbruchs 21. Die Vertiefungen 21a bis 21d und 22a bis 22d sind jeweils in einem Abstand von 90° angeordnet.

In dem Durchbruch 21 ist gemäß den bisherigen Ausführungen ein Halteteil 23 eingespritzt, welches mit Ansätzen 24a bis 24d in die Vertiefungen 21a bis 21d und mit Ansätzen 25a bis 25d in die Vertiefungen 22a bis 22d eingreift.

Durch die gleichmäßig verteilte Anordnung der Vertiefungen 21a bis 21d und 22a bis 22d wird die ebenfalls gleichmäßige Kraftverteilung der Kräfte, welche die Ansätze 24a bis 24d bzw. 25a bis 25d auf die Vertiefungen 21a bis 21d bzw. 22a bis 22d ausüben, erreicht. Somit wird das Halteteil 23 durch Ausnutzung der bei der Schwindung auftretenden Kräfte bezüglich der Mittelachse S₄ des Durchbruchs 21 stabilisiert und zentriert.

## Patentansprüche

1. Aus Kunststoff geformtes Halteteil (15, 16, 23), das als Basis für Funktionsteile (18) an einer metallischen Trägerplatte (1, 20) gebildet ist, das zu seiner Halterung an der metallischen Trägerplatte (1, 20) einen an dieser vorgesehenen Durchbruch (2, 21) mit einem Haltesteg (5, 17) durchgreift und das Haltestücke (7a, 7b) aufweist, die sich an beiden Plattenoberflächen (6a, 6b) der metallischen Trägerplatte (1, 20) abstützen, dadurch gekennzeichnet, daß die Plattenoberflächen (6a, 6b) der metallischen Trägerplatte (1, 20) seitlich des Durchbruchs (2, 21) Vertiefungen (4a, 4b; 21a bis 21d, 22a bis 22d) aufweisen, in welche Ansätze (11a, 11b; 24a bis 24d, 25a bis 25d) der Haltstücke (7a, 7b) des Halteteiles (15, 16, 23) eingreifen.

2. Halteteil nach Anspruch 1, dadurch gekennzeichnet, daß die Böden (13a, 13b) der Vertiefungen (4a, 4b; 21a bis 21d, 22a bis 22d) derart geneigt zur Plattenmitte angeordnet sind, daß sich die Tiefe der Vertiefungen (4a, 4b; 21a bis 21d, 22a bis 22d) mit zunehmendem Abstand von der Durchbruchsachse (S₁, S₄) vergrößert.

3. Halteteil nach Anspruch 1 oder 2, dadurch gekennzeichnet, daß beide Plattenoberflächen (6a, 6b) der metallischen Trägerplatte (1, 20) seitlich des Durchbruchs (2, 21) mindestens drei Vertiefungen (21a bis 21d, 22a bis 22d) aufweisen, welche jeweils um den Winkel 360°/x gegeneinander versetzt auf dem Umfang eines Kreises (K) um den Durchbruch (2, 21) angeordnet sind, wobei x die Anzahl der Vertiefungen (21a bis 21d, 22a bis 22d) auf jeder Plattenoberfläche (6a, 6b) ist, und daß sich das Halteteil (15, 16, 23) durch die Anordnung der Vertiefungen (21a bis 21d, 22a bis 22d) gegenüber der Durchbruchsachse (S₁, S₄) zentriert.

4. Halteteil nach Anspruch 1 oder 2, dadurch gekennzeichnet, daß beide Plattenoberflächen (6a, 6b) der metallischen Trägerplatte (1, 20) eine ringförmige Vertiefung (4a, 4b) aufweisen, wobei die Mittelachse (S₂, S₃) der ringförmigen Vertiefungen (4a, 4b) im wesentlichen mit der Durchbruchsachse (S₁) identisch ist, und daß sich das Halteteil (15, 16, 23) durch die Anordnung der Vertiefungen (4a, 4b) gegenüber der Durchbruchsachse (S₁) zentriert.

5. Laufwerk mit einem Halteteil nach einem der Ansprüche 1 bis 4.

6. Magnetbandkassettengerät mit einem Laufwerk nach Anspruch 5.

7. Verfahren Herstellen des Halteteils nach einem der Ansprüche 1 bis 4, dadurch gekennzeichnet, daß während des Herstellens der Vertiefungen (4a, 4b) in der metallischen Trägerplatte (1) der den Vertiefungen (4a, 4b) zugeordnete Durchbruch (2) der metallischen Trägerplatte (1) mittels eines Füllstempels (17) ausgefüllt wird.
